# EUROPEAN PATENT APPLICATION

(11) **EP 2 242 281 A2**
(43) Date of publication of application: **20.10.2010**
(21) Application number: 10159721.9
(22) Date of filing: 13.04.2010
(51) Int. Cl.: H04N 13/00

(54) **Method and apparatus for producing a three-dimensional image message in mobile terminals**

(30) Priority: 13.04.2009 KR 20090031749
(71) Applicant: SAMSUNG ELECTRONICS CO., LTD., Suwon-si, Gyeonggi-do (KR)
(72) Inventor: Sung, Jung-Sic, Gyeonggi-do, Suwon-si (KR); Kim, Gi-Wook, Gyeonggi-do, Suwon-si (KR); Kwon, Yong-Jin, Gyeonggi-do, Suwon-si (KR); Song, Se-June, Gyeonggi-do, Suwon-si (KR)
(74) Representative: Ketelaars, Maarten F.J.M.

(57) **Abstract**

A method and an apparatus for producing a 3-Dimensional (3-D) image message in a mobile terminal are provided. In the method, one of a plurality of stored images is determined. A 3-D image is set and displayed at a predetermined position of the determined image. Further disclosed is setting one of motion, sound, props and text on the selected the 3-D image.

## Description

### Background of the Invention

### 1. Field of the Invention

The present invention relates to the field of mobile terminals, and more particularly to a method and an apparatus for producing a Three-Dimensional (3-D)
image message in a mobile terminal.

### 2. Description of the Related Art

Mobile terminals have been rapidly distributed and used by the consuming public due to their convenience and portability. Accordingly, service providers and terminal manufacturers competitively develop terminals having even more convenient functions in order to secure additional users and to retain their current number of users. For example, one very common and useful feature (application) of a mobile terminal is their ability to provide a message service that allows transmission/reception of information between users such as a Short Message Service (SMS), a multimedia message service, and an electronic (E)-mail service.

A currently provided message service has a simple two-dimensional (2-D) form. For example, a commonly used SMS includes a monotonous text and an emoticon, and a multimedia message service transmits a 2-D image and music or a moving image at most. That is, the currently provided message is a 2-D message and has limited ability in satisfying a user's expression who has experienced a three-dimensional (3-D) environment through, for example, a 3-D online game, a 3-D animation, etc.

Accordingly, a 3-D message that can express personalities needs to be provided.

### Summary of the Invention

An aspect of the present invention is to provide a method and an apparatus for producing a 3-D image message in a mobile terminal.

Another aspect of the present invention is to provide a method and an apparatus for producing a 3-D image message.

Still another aspect of the present invention is to provide a method and an apparatus for producing a 3-D image message including a 3-D character to which a characteristic, such as a motion has been applied in a mobile terminal.

Yet another aspect of the present invention is to provide a method and an apparatus for applying various effects to a 3-D image message in a mobile terminal. A further aspect of the present invention is to provide a method and an apparatus for transmitting a 3-D image message to another terminal in a mobile terminal.

In accordance with an aspect of the present invention, a method for producing a 3-Dimensional (3-D) image message in a mobile terminal is provided. The method includes determining one of a plurality of images stored in advance, setting a 3-D image and displaying the 3-D image on a predetermined position of the image, enhancing the 3-D image by setting a characteristic associated with the 3-D image; and producing the 3-D image message with the enhanced 3-D image.

In accordance with another aspect of the present invention, an apparatus for producing a 3-Dimensional (3-D) image message in a mobile terminal is provided. The apparatus includes a storage for storing templates for producing a 3-D image message, a 3-D image producer for determining one of a plurality of images stored in the storage, setting a 3-D imager, causing the 3-D image to be displayed on a display unit at a predetermined position of the image, enhancing the 3-D image by setting a characteristic associated with the 3-D image; and producing the 3-D image message with the enhanced 3-D image

Other aspects, advantages and salient features of the invention will become apparent to those skilled in the art from the following detailed description, which, taken in conjunction with the annexed drawings, discloses exemplary embodiments of the invention.

### Brief Description of the Drawings

The above and other aspects, features and advantages of exemplary embodiments of the present invention will be more apparent from the following description taken in conjunction with the accompanying drawings in which:
FIG. 1 is a view illustrating a system configuration according to an exemplary embodiment of the present invention;
FIG. 2 is a block diagram illustrating an exemplary mobile terminal according to an embodiment of the present invention;
FIG. 3 is a flowchart illustrating a procedure for producing a 3-D image message in a mobile terminal according to an exemplary embodiment of the present invention;
FIG. 4 is a flowchart illustrating a procedure for setting a character of a 3-D image message in a mobile terminal according to an exemplary embodiment of the present invention;
FIG. 5 is a flowchart illustrating a procedure for setting motion of a 3-D image message in a mobile terminal according to an exemplary embodiment of the present invention;
FIG. 6 is a flowchart illustrating a procedure for setting an effect of a 3-D image message in a mobile terminal according to an exemplary embodiment of the present invention;
FIG. 7 is a flowchart illustrating a procedure for transmitting a 3-D image message in a mobile terminal according to an exemplary embodiment of the present invention;
FIG. 8 is a illustrates a view of a menu configuration screen for producing a 3-D message in a mobile terminal according to an exemplary embodiment of the present invention;
FIGS. 9A to 9C illustrate basic template select screens for producing a 3-D message in a mobile terminal according to an exemplary embodiment of the present invention;
FIGS. 10A to 10D illustrate a 3-D message select screens for editing a 3-D message in a mobile terminal according to an exemplary embodiment of the present invention;
FIGS. 11A to 11C illustrate screens for storing a 3-D message in a mobile terminal according to an exemplary embodiment of the present invention;
FIGS. 12A to 12E and FIGS. 13A to 13D illustrate screens for setting a character of a 3-D message in a mobile terminal according to an exemplary embodiment of the present invention;
FIGS. 14A to 14F illustrate screens for editing a character of a 3-D image message in a mobile terminal according to an exemplary embodiment of the present invention;
FIGS. 15A and 15B illustrate screens for setting motion to a 3-D image message in a mobile terminal according to an exemplary embodiment of the present invention;
FIGS. 16A and 16E illustrate screens for setting sound to a 3-D image message in a mobile terminal according to an exemplary embodiment of the present invention; and
FIGS. 17A and 17B are views illustrating a screen for transmitting a 3-D image message in a mobile terminal according to an exemplary embodiment of the present invention.

Throughout the drawings, like reference numerals will be understood to refer to like parts, components and structures.

### Detailed Description of the Invention

The following description with reference to the accompanying drawings is provided to assist in a comprehensive understanding of exemplary embodiments of the invention as defined by the claims and their equivalents. It includes various specific details to assist in that understanding but these are to be regarded as merely exemplary.

Accordingly, those of ordinary skill in the art will recognize that various changes and modifications of the embodiments described herein can be made without departing from the scope and spirit of the invention. Also, descriptions of well-known functions and constructions are omitted for clarity and conciseness.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those skilled in the art, may occur in amounts that do not preclude the effect the characteristic was intended to provide.

Exemplary embodiments of the present invention provide a method and an apparatus for producing a 3-D image message using basic templates in a mobile terminal. Here, the basic template includes for example, a background screen, a character, props, motion and sound, etc., elements for producing a 3-D image by the mobile terminal.

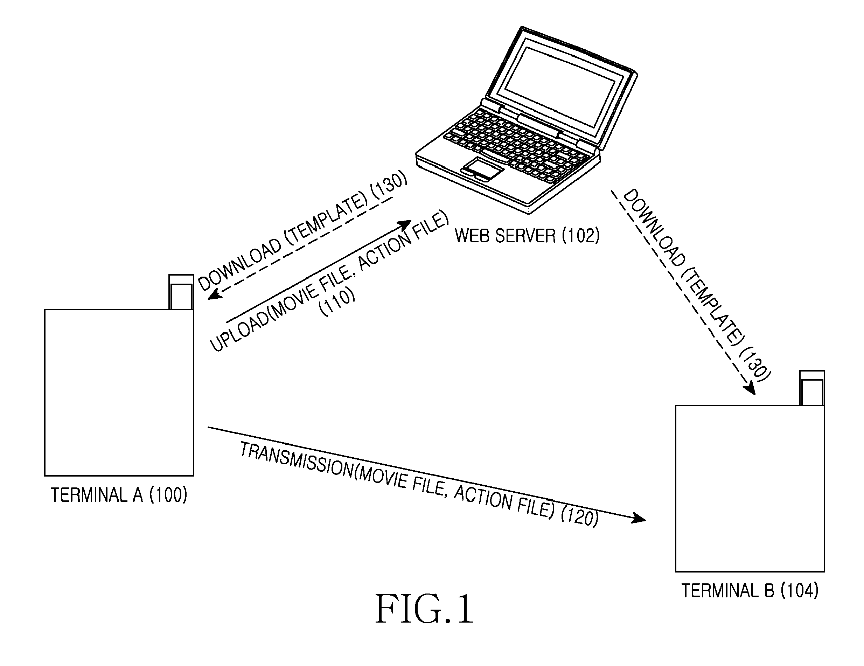

FIG. 1 is a view illustrating a system configuration according to an exemplary embodiment of the present invention.

Referring to FIG. 1, a terminal A 100 produces a 3-D image message using basic templates stored in advance. The terminal A 100 may upload the produced 3-D image message to a web server 102 in step 110 or may transmit the produced 3-D image message to a terminal B 104 in step 120. For example, the terminal A 100 may upload or transmit one or more of a movie file encoded as a moving image file using the 3-D image message, and an action file of the 3-D image message. Here, the action file denotes a script file representing operation of the 3-D image message or status information. Here, if the terminal B 104 is a terminal that does not support a function of producing a 3-D image message, the terminal A 100 transmits only the movie file to the terminal B 104. If the terminal B 104 is a terminal that supports a function of producing the 3-D image message, the terminal A 100 may transmit both the movie file and the action file, or may transmit only one of the two files. Here, the movie file and the action file may be transmitted via a short distance communication technique such as a Multi-Media Service (MMS), an E-mail, and Bluetooth.

In addition, the terminal A 100 and the terminal B 104 may download a template for producing the 3-D image message from the web server 102 in step 130 and update the templates stored in advance.

The web server 102 stores templates for producing a 3-D image message of a terminal, and provides a function of allowing other users to share a 3-D image message uploaded by the terminal A 100.

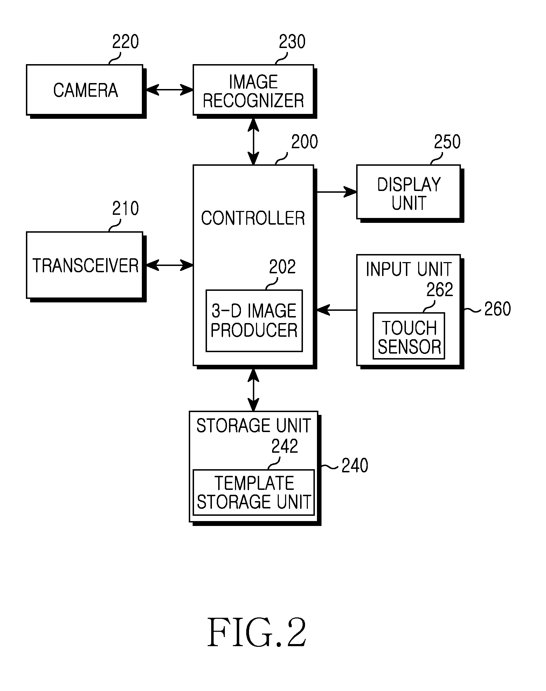

FIG. 2 is a block diagram illustrating a mobile terminal according to an exemplary embodiment of the present invention.

Referring to FIG. 2, the terminal includes a controller 200, a transceiver 210, a camera unit 220, an image recognizer 230, a storage unit 240, a display unit 250, and an input unit 260. The controller 200 includes a 3-D image producer 202. The storage unit 240 includes a template storage unit 242. The input unit 260 includes a touch sensor 262.

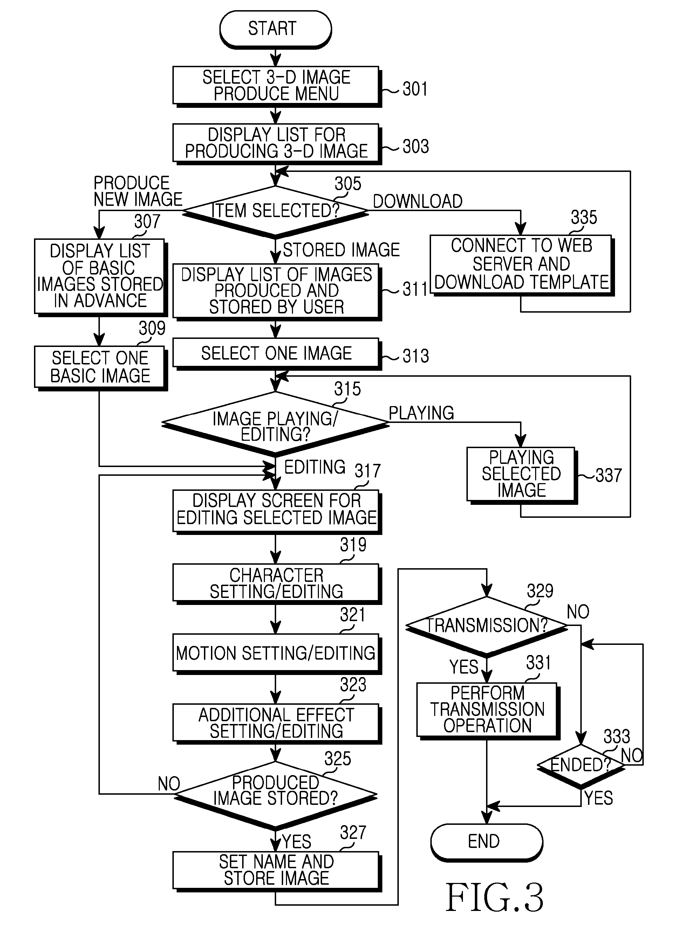

The controller 200 controls and processes an overall operation of the mobile terminal. According to an exemplary embodiment of the present invention, the controller 200 (i.e., the 3-D image producer 202) controls and processes a function for producing a 3-D image message including a 3-D character to which one or more characteristics (motion, sound, text) may be applied based on stored templates. When an event for producing a 3-D image message occurs, the 3-D image producer 202 displays a list for producing a 3-D image message, controls and processes a function for producing and editing a 3-D image message based on the templates stored in advance or a user-produced image message according to a selected item to enhance the image, and controls and processes a function for transmitting the produced 3-D image message to an external apparatus. Here, a detailed operation of the 3-D image producer 202 is described with reference to FIGS. 3 to 7.

The transceiver 210 processes a signal transmitted to or received from a counterpart terminal or the web server under control of the controller 200. That is, the transceiver 210 provides a signal received or downloaded from a counterpart terminal or the web server to the controller 200, and uploads a signal provided by the controller 200 to the web server, or Radio Frequency (RF)-processes the signal and transmits the same to the counterpart terminal.

The camera unit 220 includes a camera sensor (not shown) for converting a light signal detected upon image capture into an electrical signal, and a signal processor (not shown) for converting an analog image signal captured by the camera sensor into digital data. The camera unit 220 processes the image signal converted into the digital data on a frame basis and provides the same to the image recognizer 230.

The image recognizer 230 recognizes and extracts a face from an image provided by the camera unit 220 or from an image stored in the storage unit 240 under control of the controller 200. Here, the image recognizer 230 may recognize and extract a face from an image using conventional image recognition algorithm.

The storage unit 240 stores various programs and data for an overall operation of the mobile terminal. The storage unit 240 stores basic templates for producing the 3-D image message in the template storage unit 242. The basic templates for producing the 3-D image message may be updated under control of the controller 200. In addition, the storage unit 240 stores user-produced 3-D image messages.

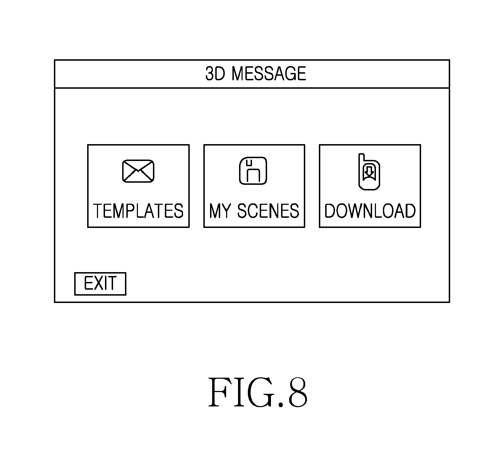

The display unit 250 displays status information, numbers and letters, and/or a moving image and a still image, etc., generated during an operation of the mobile terminal. More particularly, the display unit 250 displays a 3-D image message produced under control of the controller 200. To assist in the creation or production of the 3-D image message, the display unit 250 may display one or more screens, as illustrated in FIGS. 8 to 17, under control of the controller 200.

The input unit 260 includes various numerical keys, letter keys, and function keys, and provides data corresponding to a key input by a user to the controller 200. In addition, the input unit 260 recognizes an operation in which the display unit 250 is touched by a user and provides a coordinate corresponding to the touched position to the controller 200 by including the touch sensor 262.

FIG. 3 is a flowchart illustrating a procedure for producing a 3-D image message in a mobile terminal according to an exemplary embodiment of the present invention.

Referring to FIG. 3, when a 3-D image production menu is selected in step 301, the terminal displays a list for producing the 3-D image message in step 303. For example, as illustrated in FIG. 8, the terminal may display 'Templates' for producing a new image based on basic templates, 'My Scenes' for editing an image produced and stored by a user, and 'Download' for downloading a new template from a web server.

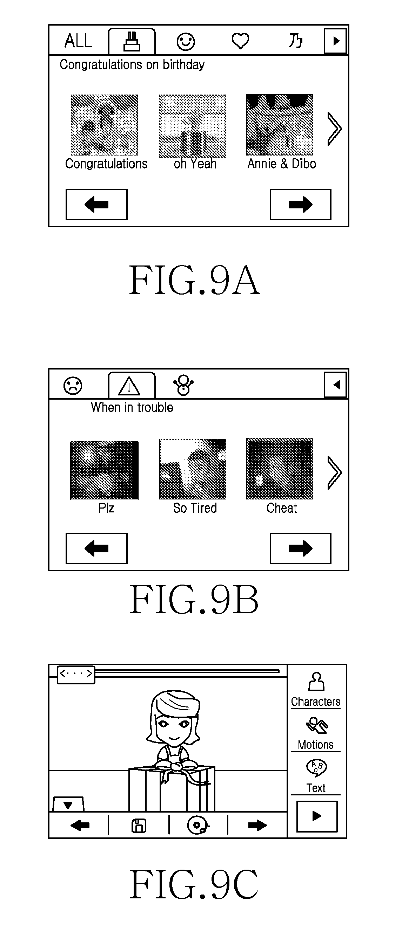

The terminal determines whether a specific item is selected by the user in step 305. When the item for producing a new image is selected, the terminal displays a list of basic images from the stored templates in step 307, recognizes that a screen is touched and receives one basic image from the user in step 309, and proceeds to step 317. Here, the basic images are images provided for producing the 3-D image message by the terminal, and may include a background image and at least one character. At this point, the list of the basic images may be classified into themes and may be displayed for each theme. For example, the terminal may classify and display the list of the basic images for respective various themes such as birthday celebration-related images, mood expression-related images, and weather-related images as illustrated in FIGS. 9A and 9B.

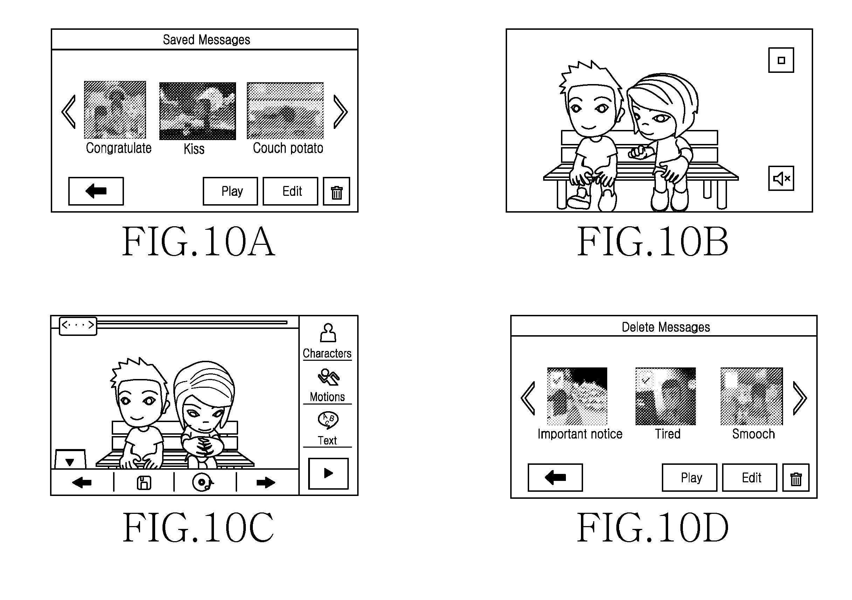

When the item for editing an image produced and stored by the user is selected, the terminal searches for and displays images produced and stored by the user in step 311, receives one image from the user in step 313, and proceeds to step 317. For example, as illustrated in FIG. 10A, the terminal displays a list of the images produced and stored by the user. Here, the terminal may extract and display thumbnails of the images produced and stored by the user. At this point, as illustrated in FIG. 10D, the terminal may select and delete at least one of the displayed images.

The terminal determines whether a menu for playing the selected image is selected or whether a menu for editing the selected image is selected in step 315. When the menu for playing an image is selected, the terminal plays the selected image as illustrated in FIG. 10B in step 337, returns to step 315 and re-performs subsequent steps. In contrast, when the menu for editing the image is selected, the terminal proceeds to step 317.

The terminal displays a screen for editing the selected image in step 317. For example, as illustrated in FIGS. 9C and 10C, the terminal displays a screen for editing the selected image. Here, the screen for editing the image includes a character setting menu, a motion setting menu, a text setting menu, a sound setting menu, a store menu, a previous menu, a next menu, a play menu, etc.

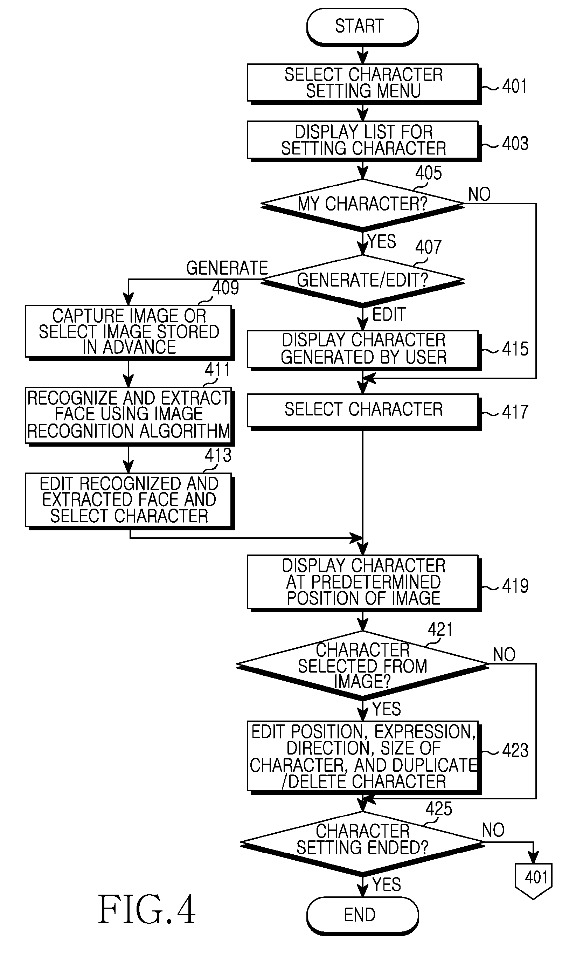

The terminal sets and edits a character based on a user's selection in step 319, and sets and edits motion of the character in step 321. The terminal sets and edits an effect such as an additional effect (for example, sound, text and props, etc.) in step 323. Here, procedures for setting and editing the character, the motion, and the additional effect may be performed in a different order, for example, in the order of the additional effect, the character, and the motion. In addition, all of the procedures for setting and editing the character, the motion, and the additional effect may be performed, but only one or two of the procedures may be performed depending on a user's selection. For example, only the character and the motion may be set and edited, or the character and the additional effect may be set and edited. Here, the procedures for setting and editing the character, the motion, and the additional effect are described later in more detail with reference to FIGS. 4 to 6.

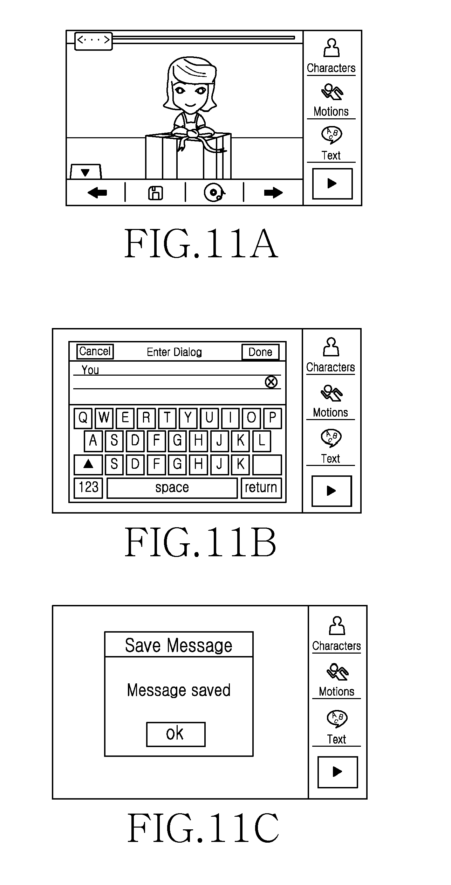

The terminal determines whether a menu for storing a produced image is selected in step 325. When the menu for storing the produced image is not selected, the terminal returns to step 317. When the menu for storing the produced image is selected, the terminal receives a name from a user or sets a name according to a predetermined method and stores the produced image in step 327. For example, when the menu for storing a produced image is selected as illustrated in FIG. 11A, the terminal displays an input window to receive a name of the image from the user as illustrated in FIG. 11B, and maps the input name to the produced image and stores the mapped name.

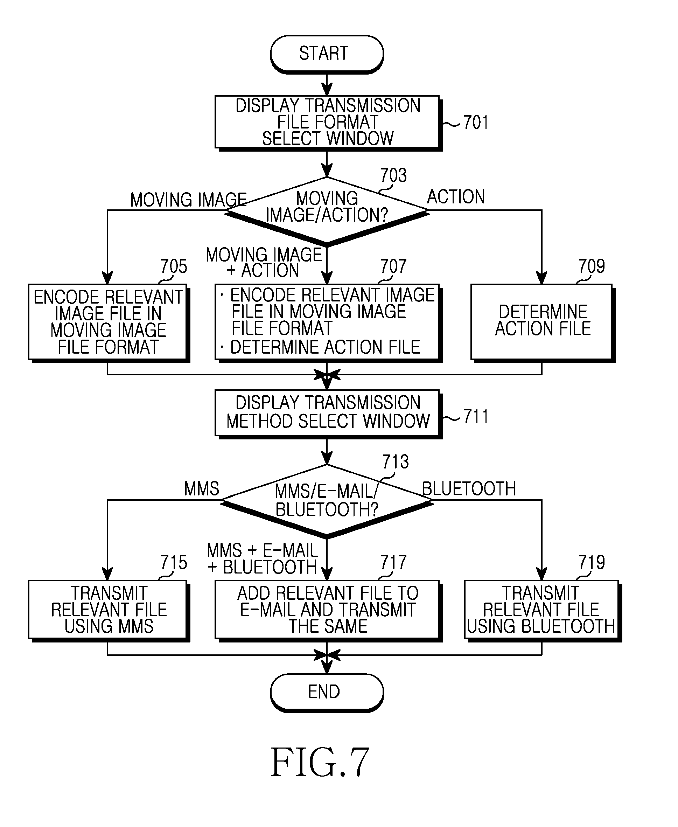

The terminal determines whether a menu for transmitting the produced image is selected in step 329. When the menu for transmitting the produced image is selected, the terminal performs an operation for transmitting the produced image to an external apparatus in step 331, which is described later with reference to FIG. 7. In contrast, when the menu for transmitting the produced image is not selected, the terminal determines whether an event for ending the 3-D image message production occurs, and when the ending event occurs, ends the algorithm according to the exemplary embodiment of the present invention in step 333.

When an item for downloading a new template from the web server is selected as a result of the determination in step 305, the terminal connects to the web server and downloads a template selected by the user in step 335, and returns to step 305 and re-performs subsequent steps.

FIG. 4 is a flowchart illustrating a procedure for setting a character of a 3-D image message in a mobile terminal according to an exemplary embodiment of the present invention.

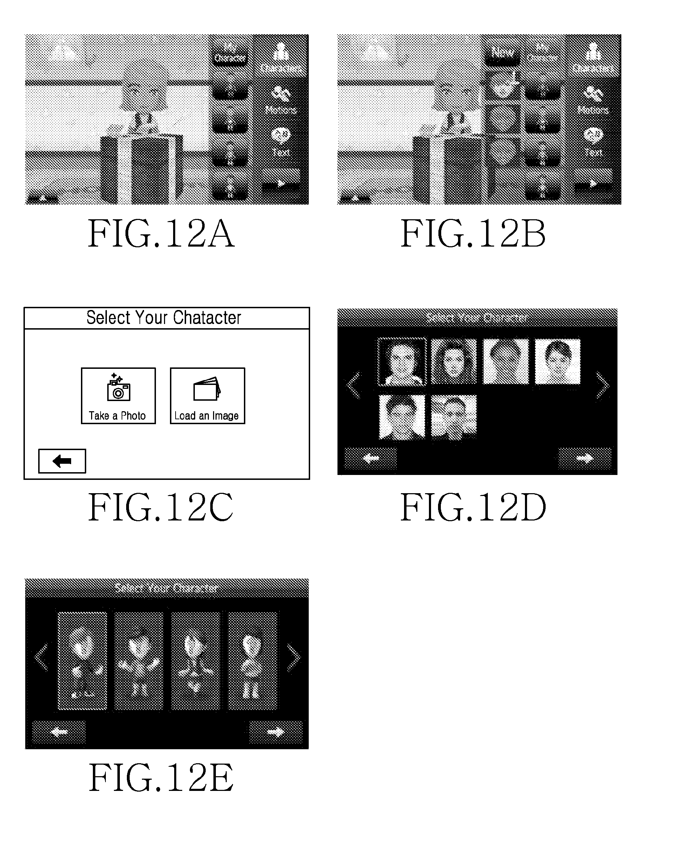

Referring to FIG. 4, when a character setting menu is selected in step 401, the terminal displays a list for setting a character (i.e., characteristic) in step 403. For example, as illustrated in FIG. 12A, the terminal displays an item 'My character' for setting a user's personal character, and basic characters provided by the terminal.

The terminal determines whether the item 'My character' for setting the user's personal character is selected in step 405. When the item 'My character' is selected, the terminal determines in step 407 whether to generate the user's personal character or whether to edit the user's personal characters previously generated. For example, as illustrated in FIG. 12B, the terminal displays an item "New" for generating a new character and previously generated characters.

When a new personal character is to be generated, the terminal captures an image, receives one of images stored in advance from the user, or obtains an image for generating the character in step 409. For example, as illustrated in FIG. 12C, the terminal displays items 'Take a Photo' (for capturing an image) and 'Load an Image' (for reading the images stored in advance). When a 'Take a Photo' item is selected, a camera may be driven or directed to capture an image. When the selected item is the item 'Load an Image' then the images stored in advanced (FIG. 12D, 12E) may be displayed. The user may then select one of the displayed images.

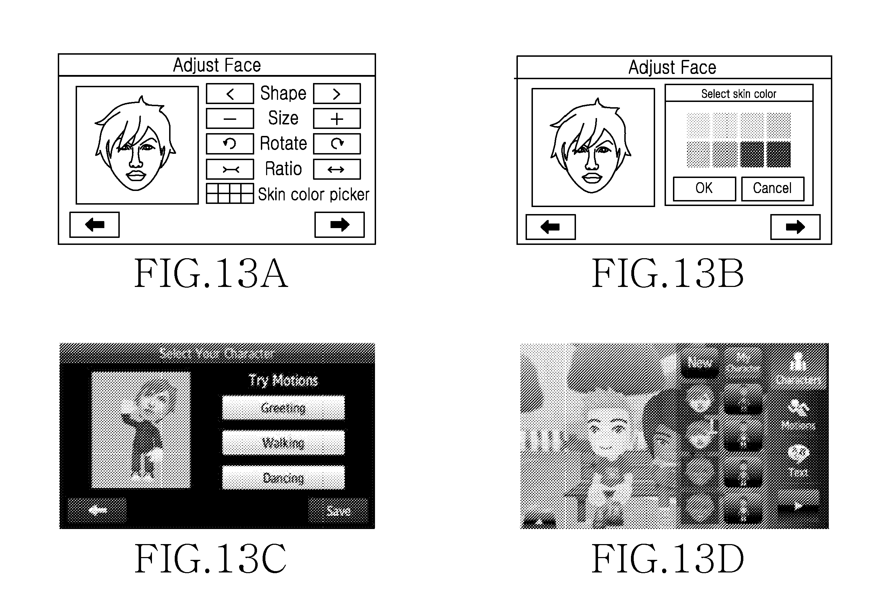

In one aspect, the terminal recognizes a face from the obtained image using an image recognition algorithm and extracts the recognized face in step 411. The terminal generates the user's personal character (i.e., characteristic) using the recognized and extracted face in step 413, and proceeds to step 419. Here, the terminal may generate the user's personal character by combining the extracted face with a specific character. For example, as illustrated in FIG. 12E, the terminal may display characters (i.e. characterization) each having a different sex, a different hair style, a different costume, and a different motion, receive one selected character from the user, and generate the user's unique character (characteristic) by combining the selected character with the face recognized and extracted from the image. In addition, as illustrated in FIGS. 13A and 13B, the terminal may control the shape, the size, the rotation direction, the ratio(i.e., a height to width ratio), and the skin color of the recognized and extracted face. In addition, the terminal may apply various motions to the generated character and store the motion as illustrated in FIG. 13C, and may add the stored character as a previously generated character as illustrated in FIG. 13D.

When editing of a previously generated character is determined in step 407, the terminal displays a character previously generated by a user in step 415, allows the user to select one character in step 417, and proceeds to step 419. For example, as illustrated in FIG. 12B, the terminal may display previously generated characters and allow the user to select one character.

When the item 'My character' for setting a user's personal character is not selected in step 405, the terminal jumps to step 417 to allow the user to select one basic characters provided by the terminal in step 417, and proceeds to step 419.

The terminal displays a generated or selected character on a predetermined position of an image in step 419. At this point, the terminal displays the character on a position designated by the user'.

The terminal determines whether a character is selected in the image in step 421. When the character is selected, the terminal performs an operation for editing the position, the expression, the direction, the size, etc. of the character according to the user's manipulation, or an operation for duplicating or deleting the character in step 423.

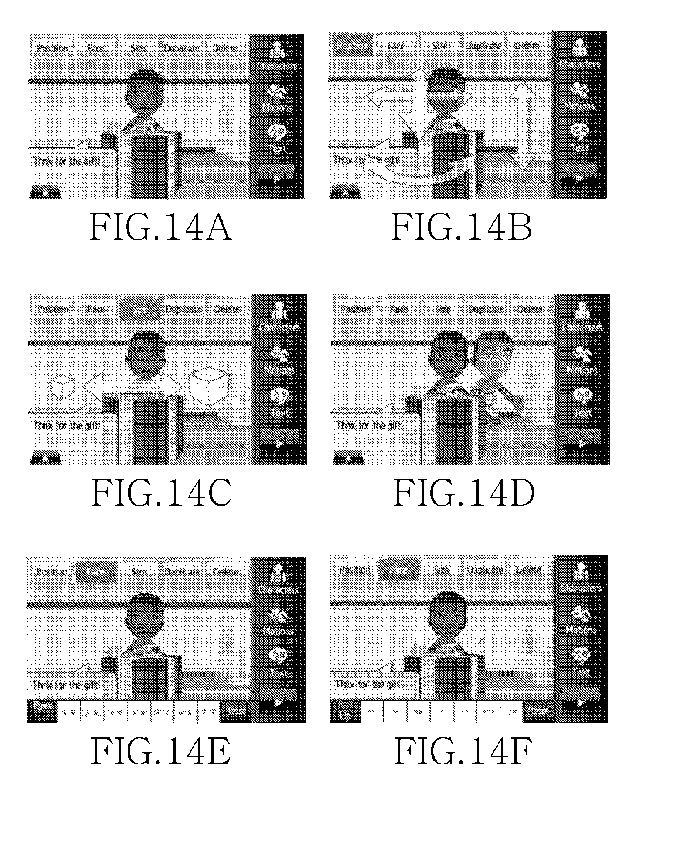

For example, as illustrated in FIG. 14A, when the character is selected, the terminal displays a menu for editing, duplicating, or deleting the character. At this point, to represent a selected specific character, the terminal may give an effect of changing the color of the selected character to one of a plurality of predetermined different colors temporarily, blurring the selected character, or sharpening the outline of the character. When a menu for changing the position of a character is selected as illustrated in FIG. 14B, or a menu for changing the size is selected as illustrated in FIG. 14C, the terminal may move the position of the character or change the size of the character, respectively, using a well-known "drag-and-drop" feature. In addition, when a duplicate menu is selected as illustrated in FIG. 14D, the terminal may insert the same character as the selected character. When a face change menu is selected as illustrated in FIGS. 14E and 14F, the terminal may change the eyes, the nose, and the mouth of the character.

In contrast, when the character is not selected, the terminal jumps to step 425. The terminal determines whether character setting is ended in step 425. When the character setting is not ended, the terminal returns to step 401 and re-performs subsequent steps. When the character setting is ended, the terminal ends the algorithm according to the exemplary embodiment of the present invention.

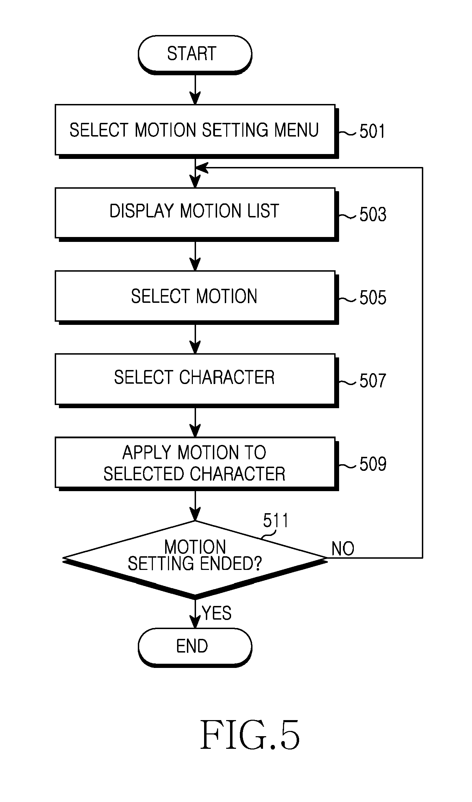

FIG. 5 is a flowchart illustrating a procedure for setting motion of a 3-D image message in a mobile terminal according to an exemplary embodiment of the present invention.

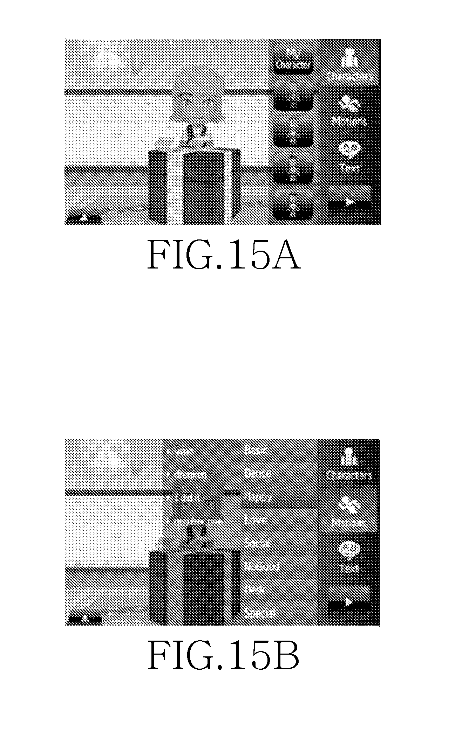

Referring to FIG. 5, when a motion setting menu is selected in step 501, the terminal displays a list of motions stored in advance in the terminal in step 503. FIG. 15A illustrates a character screen in a manner similar to that shown in FIG. 12A. As illustrated in FIG. 15B, when a "motion" element is selected, the terminal displays an item "Basic", which is a basic motion, an item 'Dance', which is a dance motion, an item "Happy", which is a motion expressing a happy mood, an item "Love", which is a motion expressing love, etc. Here, though the motion has been expressed in the form of text representing the relevant motion, the motion may be displayed in the form of an icon representing the relevant motion.

The terminal allows a user to select one motion in step 505, allows the user to select a character to which the motion is to be applied in step 507, and applies the selected motion to the selected character in step 509.

The terminal determines whether the motion setting is ended in step 511. When the motion setting is not ended, the terminal returns to step 503. When the motion setting is ended, the terminal ends the algorithm according to an exemplary embodiment of the present invention.

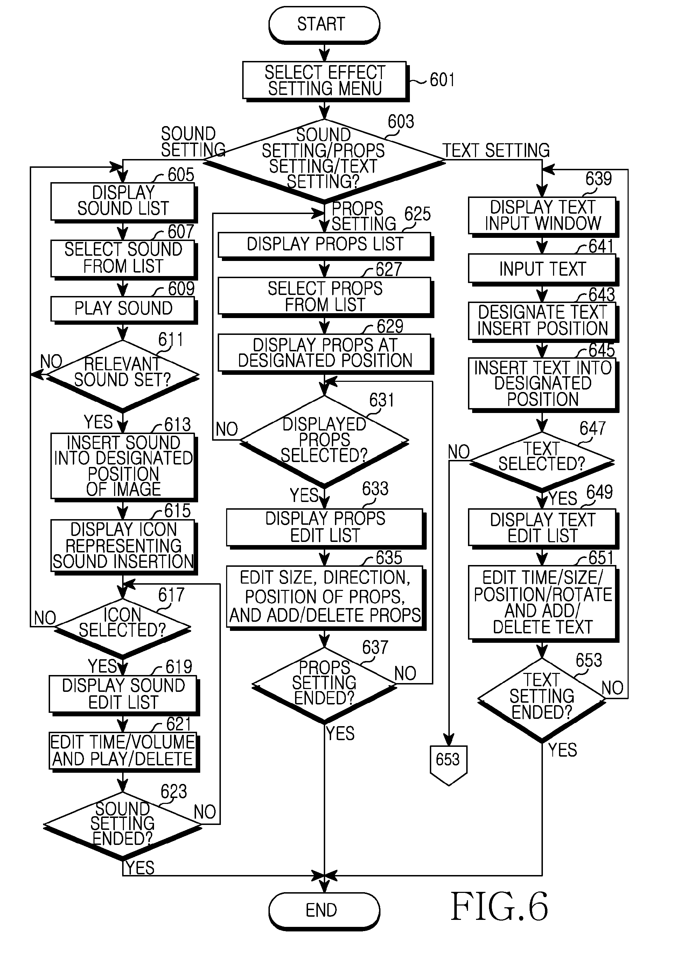

FIG. 6 is a flowchart illustrating a procedure for setting an effect of a 3-D image message in a mobile terminal according to an exemplary embodiment of the present invention.

Referring to FIG. 6, when an effect setting menu is selected in step 601, the terminal determines whether the selected effect setting menu is a menu for setting sound or a menu for setting a props or a menu for setting text in step 603.

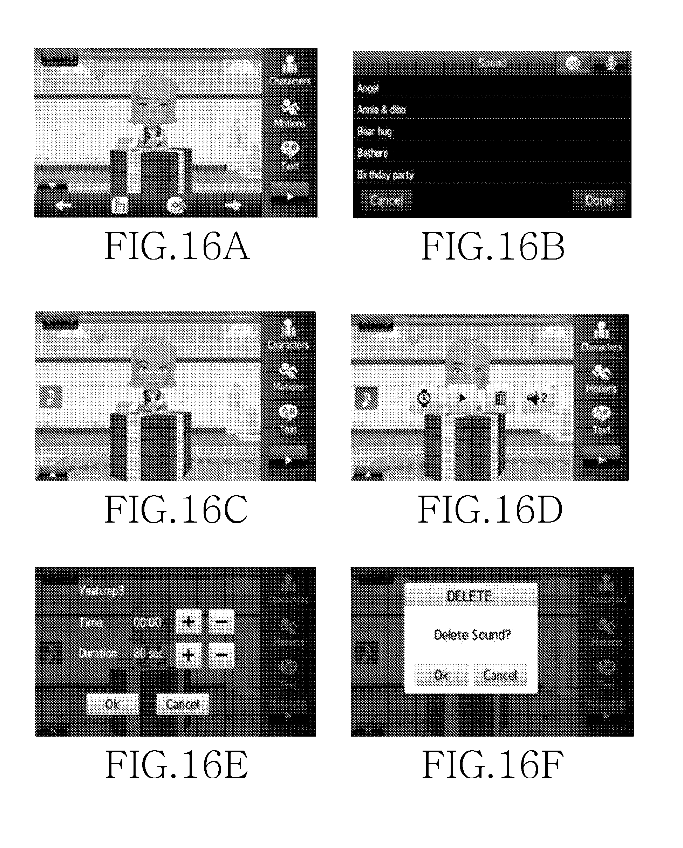

When the selected effect setting menu is the menu for setting sound, the terminal displays a list of sounds stored in advance in the terminal in step 605. Here, the sounds forming the sound list may be basic templates provided for producing the 3-D image message, and may be added and deleted by a user. When one sound is selected from the sound list by the user in step 607, the terminal plays the selected sound in step 609, and determines whether a relevant sound is set in step 611. For example, when an icon representing music is selected from an image illustrated in FIG. 16A, the terminal displays a sound list as illustrated in FIG. 16B, and determines whether a sound setting has been selected and then 'DONE' is selected.

When the relevant sound setting is not determined, the terminal returns to step 605 and re-performs subsequent steps. When the relevant sound setting is determined, the terminal inserts the sound into a designated position of the image in step 613. That is, the terminal inserts the sound into a specific play point of the image designated by a user to allow the sound to be played from the specific play point when the image is played. For example, in the case where sound is inserted into a point corresponding to 20 seconds in an image whose total play time is one minute, the terminal plays the sound from the point after 20 seconds since the play of the image.

The terminal displays an icon representing that sound is inserted into the image in step 615, and determines whether the icon is selected in step 617. For example, as illustrated in FIG. 16C, the terminal displays an icon representing sound insertion. When the icon is not selected, the terminal returns to step 605 and re-performs subsequent steps. That is, the terminal may additionally insert sound into the image.

When the icon is selected, the terminal displays a sound edit list (for example, time, play, delete, and sound volume) in step 619, and performs an operation for editing the sound according to a user's manipulation. For example, the user may input commands or operations for editing a sound play time, for playing a sound, for deleting a sound, and/or adjusting a sound volume, etc. in step 621. As illustrated in FIG. 16D, when an icon representing sound insertion is selected, the terminal displays icons representing a function for editing the relevant sound. At this point, when an icon representing a time is selected, the terminal may set and edit a play point and a play time as illustrated in FIG. 16E. When an icon representing delete is selected, the terminal processes an operation for deleting relevant sound as illustrated in FIG. 16F.

The terminal determines whether sound setting is ended in step 623. When the sound setting is not ended, the terminal returns to step 617. When the sound setting is ended, the terminal ends the algorithm according to an exemplary embodiment of the present invention.

Meanwhile, when the selected effect setting menu is a menu for setting a prop is selected, the terminal displays a props list stored in advance in the terminal in step 625. Here, the props forming the props list may be basic templates provided for producing the 3-D image message, and may be added or deleted by a user.

When one prop is selected from the props list by a user in step 627, the terminal displays the selected prop on a position designated by the user in step 629.

The terminal determines whether the displayed prop is selected in step 631. When props are not selected, the terminal returns to step 625 and re-performs subsequent steps. That is, the terminal may associate a plurality of props with the image.

When at least one prop is selected, the terminal displays a props edit list (for example, size, direction, position, add, and delete) in step 633, and , performs an operation for editing the props according to a user's manipulation. For example, the user may perform operations for editing, adding, or deleting the size, the direction, and the position of the props in step 635.

The terminal determines whether the props setting is ended in step 637. When the prop setting operation is not ended, the terminal returns to step 631 and re-performs subsequent steps. When the prop setting operation is ended, the terminal ends the algorithm according to an exemplary embodiment of the present invention.

Meanwhile, when the selected effect setting menu is a menu for setting text, the terminal displays a text input window in step 639. The terminal receives text from a user in step 641. When an insert position of the text is designated in step 643, the terminal inserts the text into the designated position in step 645.

The terminal determines whether the text is selected at block 647. When the text is not selected, the terminal proceeds to step 653. When the text is selected, the terminal displays a text edit list (for example, size, direction, position, font, color, add, and delete) in step 649, and performs an operation for editing the text according to a user's manipulation. The user may perform operations for editing, adding, or deleting the display time, size, direction, position, color, and font of the text in step 651. Here, the display time of the text may be automatically controlled according to the length of the input text.

The terminal determines whether the text setting is ended in step 653.

When the text setting is not ended, the terminal returns to step 639 and re-performs subsequent steps. When the text setting is ended, the terminal ends the algorithm according to an exemplary embodiment of the present invention.

Though sound stored in advance in the terminal is selected and a sound effect is applied in FIG. 6, recoding may also be performed by a user and a recorded sound effect may be applied.

FIG. 7 is a flowchart illustrating a procedure for transmitting a 3-D image message in a mobile terminal according to an exemplary embodiment of the present invention.

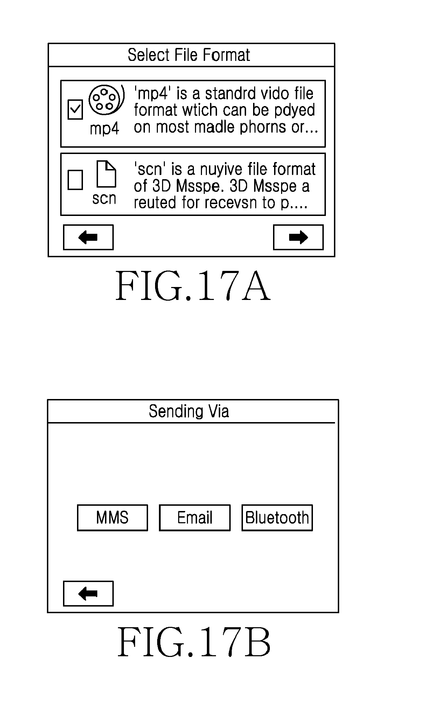

Referring to FIG. 7, when a menu for transmitting a 3-D image message is selected, the terminal displays a transmission file format select window in step 701. For example, as illustrated in FIG. 17A, the terminal displays a window requesting a user to select whether to transmit the 3-D image message in the form of an MP4 (Motion Picture Experts Group Layer 4) format, which is a moving image file, or in the form of an "scn" format, which is an action file of the 3-D image message. Here, the moving image file may be transmitted to all terminals or other devices capable of receiving and playing the transmitted signal, e.g. Personal Computers (PC). The action file may be transmitted to only terminals that support the 3-D image message function. At this point, the action file denotes a script file representing an operation of the 3-D image message or status information. That is, the action file includes information of the character included in the 3-D image message (for example, the number of characters, each character IDentifier (ID), size, direction, position, and expression), information of motion applied to the character (for example, motion ID), props information (for example, the number of props, each props ID, size, direction, and position), background image information (for example, background image ID), text information (for example, input text, text position, size, rotate, time, and font), sound information (for example, the number of sounds, each sound ID, play start time, play time, and volume), etc.

The terminal determines whether an item selected from the select window is a moving image, an action, or both in step 703. When the moving image file is selected, the terminal encodes a user-produced 3-D image message in a moving image file format and determines the moving image file as a transmission file in step 705 and proceeds to step 711. Here, during the encoding, the terminal may calculate the encoding time of the 3-D image message in advance according to a predetermined method, and display a total time taken for the encoding and a progress status.

When both the moving image file and the action file are selected, the terminal encodes the user-produced image message in the moving image file format, determines the action file of the 3-D image message, and determines the two files as the transmission files in step 707 and then proceeds to step 711. When only the action file is selected, the terminal determines the action file of the 3-D image message and determines the action file as the transmission file in step 709, and then proceeds to step 711.

The terminal displays a window requesting a user to select a transmission method of the 3-D image message in step 711. For example, the terminal displays a window requesting the user to select whether to transmit the 3-D image message using one of an MMS, an E-mail, and the Bluetooth as illustrated in FIG. 17B.

The terminal determines whether the selected item in the select window is the MMS, the E-mail, or the Bluetooth in step 713. When the MMS is selected, the terminal transmits the file to be transmitted to an external apparatus using the MMS in step 715. Here, since the MMS is limited in its transmission capacity, in the case of transmitting both the moving image file and the action file, the terminal may transmit the two files separately. In addition, when the action file has a capacity greater than a maximum transmission capacity of the MMS, the terminal temporarily removes a sound file included in the action file, and re-determines whether the size of the action file is greater than the maximum transmission capacity of the MMS. When the size of the action file from which the sound file has been temporarily removed is greater than the maximum transmission capacity of the MMS as a result of the re-determination, the terminal may inform the user that the transmission cannot be performed due to the file size. When the size of the action file from which the sound file has been temporarily removed is equal to or smaller than the maximum transmission capacity of the MMS, the terminal may inform the user that transmission is impossible due to the file size and ask whether to remove the sound file and retransmit the action file.

When the E-mail is selected, the terminal adds the file to be transmitted to an E-mail and transmits the same to an external apparatus in step 717. When the Bluetooth is selected, the terminal transmits the file to be transmitted to an external apparatus using the Bluetooth communication technique in step 719.

The terminal then ends the algorithm according to an exemplary embodiment of the present invention.

In the above description, the external apparatus that has received the action file from the terminal may generate and play the 3-D image message transmitted by the terminal using the basic templates for generating the 3-D image message based on the action file. At this point, when screen sizes of the terminal and the external apparatus are different from each other, the external apparatus may change the 3D-image message transmitted by the terminal so that the 3-D image message is suitable for the size of the external apparatus.

In addition, the terminal may determine whether a different terminal supports the 3-D image message function using an Unstructured Supplementary Services Data (USSD) field transmitted/received via communication or a message. Such information may be stored in a phonebook entry associated with the receiving terminal.

In addition, a 3-D image message to be transmitted may be set such that the 3-D image message is reusable or not reusable at the reception side. A reception side may or may not reuse a 3-D image message depending on a setting of the 3-D image message.

Though description has been made to the producing of a 3-D image message in the above, one 3-D moving image may be produced using a plurality of the above-produced 3-D image messages. That is, a user may produce one 3-D moving image by arbitrarily binding a plurality of 3-D image messages each being formed of one scene. In addition, though only setting and editing of a character, motion, props, sound, and text have been exemplarily described in the above, an image serving as a background may be edited, a camera angle may be controlled, a weather effect may be given, and brightness may be controlled without altering the scope of the invention. In addition, though only a character has been set by capturing the character using a camera or selecting an image stored in advance in the above description, the background image may be set by capturing the background using the camera or selecting an image stored in advance.

Though a description has been made to the producing of a 3-D image message at a mobile terminal in the above, the producing of the 3-D image message is applicable to all electronic apparatuses, such as a PC (desktop computer), a cellular telephone, a laptop computer, a net book and a PDA (personal digital assistant).

According to an exemplary embodiment of the present invention, a user produces a 3-D image message using basic templates in a mobile terminal, so that the user may easily produce various 3-D image messages with only simple manipulations, and express the user's various expressions and personalities compared to the conventional 2-D message service.

The above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be executed by such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein. As would be recognized by those skilled in the art, when a general purpose computer is loaded with, or accesses, software or code for implementing the processing shown herein, the general purpose computer is transformed into a special purpose computer that may at least perform the processing shown herein. In addition, the computer, processor or dedicated hardware may be composed of at least one of a single processor, a multi-processor, and a multi-core processor.

Although the invention has been shown and described with reference to certain exemplary embodiments thereof, it will be understood by those skilled in the art that various changes in form and details may be made therein without departing from the spirit and scope of the invention as defined by the appended claims and their equivalents. Therefore, the scope of the present invention should not be limited to the above-described embodiments but should be determined by not only the appended claims but also the equivalents thereof.

## Claims

1. A method for producing a three-Dimensional (3-D) image message in a mobile terminal, the method comprising:
determining one of a plurality of stored images;
setting a 3-D image;
displaying the 3-D image at a predetermined position;
enhancing the 3-D image by setting a characteristic associated with the 3-D image; and
producing the 3-D image message with the enhanced 3-D image.

2. An apparatus for producing a three-Dimensional (3-D) image message in a mobile terminal, the apparatus comprising:
a storage unit for storing templates associated with a 3-D image;
a 3-D image producer for:
selecting one of a plurality of images stored in the storage unit,
setting a 3-D image,
causing a display of the 3-D image at a predetermined position on a display unit,
enhancing the 3-D image by setting a characteristic associated with the 3-D image; and
producing the 3-D image message with the enhanced 3-D image.

3. The method of claim 1 and apparatus of claim 2, respectively, and
the method is wherein the 3-D image comprises one of: a stored image, a characteristic generated by extracting a face of a stored image and an image obtained by image capturing, and
the apparatus is wherein the 3-D image producer sets the 3-D image using one of: a stored characteristic, a characteristic generated by extracting a face of a stored image and an image obtained by image capturing.

4. The method of claim 1 and apparatus of claim 2, respectively, and,
the method is further comprising: performing on the displayed 3-D image at least one operation of position editing, facial shape editing, skin color editing, expression editing, direction editing, size editing, coping, and deleting, and
the apparatus is wherein the 3-D image producer performs on the displayed 3-D image at least one operation of: position editing, facial shape editing, skin color editing, expression editing, direction editing, size editing, coping, and deleting.

5. The method of claim 1 and apparatus of claim 2, respectively, and,
the method is wherein the setting of the characteristic comprises selecting at least one of a plurality of stored motions, and
the apparatus is wherein the 3-D image producer selects at least one of the stored motions in the storage unit, and sets the selected motion as the characteristic.

6. The method of claim 1 and apparatus of claim 2, respectively, and,
the method is wherein the setting of the characteristic comprising: selecting an effect from at least one of: a sound, a props, and a text, and
the apparatus is wherein the 3-D image producer selects at least one effect selected from the group consisting of: a sound, a props, and a text, and sets the selected effect as the characteristic.

7. The method and apparatus of claim 6,
the method is wherein selecting the sound effect comprises: selecting one of: a plurality of stored sounds and a sound obtained from a recording device, and performing on the selecting sound effect at least one operation of: play point editing, play time editing, volume editing, playing, and deleting , and
the apparatus is wherein the 3-D image producer sets the sound effect by: selecting one of a stored sound and a sound obtained by a recording device, and performing on the selected sound effect at least one operation of: play point editing, play time editing, volume editing, playing, and deleting.

8. The method and apparatus of claim 6,
the method is wherein the selecting props effect comprises: electing one of a plurality of stored props, and performing on the props effect selected at least one of: size editing, position editing, direction editing, adding, and deleting,
and
the apparatus is wherein the 3-D image producer sets the props effect by: selecting one of a plurality of stored props, and performing on the selected props effect at least one of :size editing, position editing, direction editing, adding, and deleting.

9. The method and apparatus of claim 6,
the method is wherein selecting the text comprises: inserting text input by a user at a predetermined position, and performing on the inserted text at least one of: size editing, position editing, direction editing, display time editing, adding, and deleting, and
the apparatus is wherein the 3-D image producer sets the text effect by: inserting text input by a user at a predetermined position, and performing on the inserted text set at least one of: size editing, position editing, direction editing, display time editing, adding, and deleting.

10. The method and apparatus of claim 6,
the method further comprising: encoding the produced 3-D image message in one of a moving image file and an action file, the action file being a script file representing an operation of the 3-D image message or status information; and transmitting at least one of the moving image file and action file, and
the apparatus further comprising: encoding the produced 3-D image message in at least one of: a moving image file and an action file, is the action file being a script file representing an operation of the 3-D image message or status information; and transmitting at least one of the moving image file and the action file.

11. The method and apparatus of claim 10,
the method is wherein the transmitting of the produced 3-D image message comprises: transmitting the produced 3-D image message using one of: a Multi-Media Service (MMS), an Electronic (E)-mail, and a short distance communication technique, and
the apparatus further comprising a transceiver for transmitting the file using one of: a Multi-Media Service (MMS), an Electronic (E)-mail, and a short distance communication technique.
